# FASCICULE DE BREVET EUROPEEN

(11) **EP 3 405 426 B1**
(45) Date de publication et mention de la délivrance du brevet: **25.12.2019**
(21) Numéro de dépôt: 17701305.9
(22) Date de dépôt: 19.01.2017
(51) Int. Cl.: B66C 1/66, B22F 3/105, B22F 5/10, B33Y 80/00

(54) **POINT DE LEVAGE PIVOTANT POUR LE LEVAGE DE CHARGES**
SCHWENKBARER ANSCHLAGPUNKT ZUM HEBEN VON LASTEN
SWIVELLING LIFTING POINT FOR THE LIFTING OF LOADS

(30) Priorité: 20.01.2016 LU 92951
(43) Date de publication de la demande: 28.11.2018
(73) Titulaire: Intelprop S.A., 9559 Wiltz (LU)
(72) Inventeur: LOSANGE, Christophe, 6640 Sibret (BE)
(74) Mandataire: Office Freylinger
(86) Numéro de dépôt international: PCT/EP2017/051080
(87) Numéro de publication internationale: WO 2017/125492

(56) Documents cités:
- EP-A1- 1 069 067
- EP-A1- 2 361 870
- CN-A- 102 864 393

## Description

### Introduction

La présente invention concerne un dispositif pour le levage de charges généralement appelé point ou anneau de levage tournant. Les anneaux tournants sont utilisés dans tous les cas où il peut être utile ou nécessaire de permettre une orientation de l'anneau par rapport à la charge manutentionnée par un pivotement de l'anneau selon un axe fixe déterminé par la fixation de l'anneau sur la charge, cet axe fixe étant généralement orthogonal à la surface de la pièce sur laquelle l'anneau est fixé.

### Etat de la technique

De tels anneaux tournants sont utilisés en particulier dans le cas où on utilise plusieurs anneaux fixés sur la charge et où ces anneaux sont reliés à un même organe de levage (par. ex. un crochet) par des élingues ou chaînes. Dans un tel cas, la direction des élingues ou chaînes de levage est inclinée par rapport à l'axe de l'organe de fixation, et il est important que le plan de la partie annulaire soit orienté selon la direction dans laquelle l'effort de traction est appliqué à l'anneau, pour éviter des efforts trop importants transversalement au plan de l'anneau, et éviter aussi tout risque de serrage excessif, et surtout de desserrage, de la vis de fixation. L'orientation de l'anneau doit donc pouvoir s'adapter à cette direction de l'effort de levage, sans que cela nécessite un pivotement de la vis de fixation, ou que cela crée sur celle-ci un couple de serrage ou de desserrage.

Typiquement, un anneau de levage comprend un corps pivotant assemblé à un organe de fixation par une liaison pivot, et une boucle d'accrochage solidaire du corps pivotant, généralement articulée.

Un objectif important pour les fabricants d'anneaux de levage est de garantir la sécurité aux utilisateurs, tout d'abord par le dimensionnement des anneaux, le choix des matériaux et la fabrication. Mais la garantie de la sécurité implique également de garantir l'intégrité des anneaux.

Un inconvénient des anneaux de levage connus réside dans leur caractère démontable. En effet, un ou plusieurs éléments essentiels de l'anneau, notamment au niveau de la liaison pivot, peuvent avoir été démontés et, sans que cela soit apparent pour l'utilisateur, remplacés par des éléments inappropriés ou de qualité inférieure. L'utilisateur d'un anneau de levage de ce type peut donc toujours craindre que l'anneau ait subi, à son insu, une modification diminuant les performances pour lesquelles il est annoncé par le fabricant et réduisant donc la sécurité.

Dans ce contexte, certains fabricants ont pris des mesures visant à limiter la possibilité de démonter l'anneau.

Les EP1069067 ou EP2361870 décrivent par exemple des anneaux tournants comportant typiquement un élément tournant de forme générale annulaire, appelé anneau ou boucle d'accrochage, monté sur un corps dans lequel un alésage est réalisé, et un organe de fixation à vis passant dans l'alésage. L'organe de fixation à vis comprend une tête servant de butée pour le corps et une partie filetée ou taraudée pour permettre sa fixation par vissage dans un trou taraudé ou sur une tige filetée solidaire de la charge à lever. Les élingues ou chaînes de levage peuvent être raccordées sur la boucle tournante par insertion dans celle-ci d'un crochet, manille, mousqueton etc.

Dans l'anneau du EP1069067, le corps pivotant est enfilé sur un boulon de fixation, et maintenu entre la tête de boulon et une douille à flasque fixée sur le boulon. Pour une sécurité accrue, la douille à flasque est frettée sur la tige du boulon.

Dans l'anneau du EP2361870, l'organe de fixation est passé dans un alésage du corps d'anneau, et coopère avec une douille et une rondelle anti-desserrage.

### Objet de l'invention

L'objet de la présente invention est de proposer un point de levage assurant un niveau de sécurité élevé.

Cet objectif est atteint par un point de levage selon la revendication 1.

### Description générale de l'invention

La présente invention concerne un point de levage pour le levage de charge comprenant :
un corps pivotant auquel est associé un moyen d'attache apte à coopérer avec un accessoire de levage ;
un organe de fixation pour fixer l'anneau à la charge, l'organe de fixation et le corps pivotant étant assemblés par une liaison pivot permettant au corps de pivoter par rapport à l'élément de fixation selon un axe A.

Selon l'invention, les parties de l'élément de fixation et du corps pivotant qui coopèrent dans la liaison pivot sont réalisées d'une seule pièce, et l'une et/ou l'autre de ces parties sont fabriquées par fabrication additive métallique, de sorte à former une liaison pivot indémontable.

La liaison pivot peut être exécutée de différentes manières, impliquant typiquement des formes complémentaires imbriquées (conjugaison de formes). En général, l'une des parties coopérantes dans la liaison pivot forme une gorge annulaire, et l'autre partie est reçue dans la gorge. En particulier, les parties coopérantes de l'organe de fixation et du corps pivotant forment au moins un ensemble gorge et languette annulaires.

En effet, les technologies de fabrication additive (aussi dites d'impression 3D) permettent de réaliser des formes mécaniques imbriquées les unes dans les autres. On appréciera que l'invention met en œuvre la fabrication additive métallique pour réaliser une liaison pivot indémontable entre l'organe de fixation et le corps pivotant. On aboutit ainsi à une structure nouvelle d'anneau, dans lequel l'organe de fixation et le corps pivotant peuvent être réalisé d'une seule pièce avec les parties coopérants dans la liaison pivot, le pivot devenant indémontable.

L'expression "réalisé d'une pièce" est utilisée dans le contexte de la présente demande dans son sens conventionnel, comme désignant une pièce monobloc, fabriquée d'un seul tenant, pouvant être typiquement fabriquée par moulage, forgeage, ou autres, y compris la fabrication additive. Le terme "liaison pivot" désigne également de manière conventionnelle une articulation permettant un guidage en rotation autour d'un axe (essentiellement sans glissement - au jeu fonctionnel près).

Pour une sécurité accrue, l'organe de fixation et le corps pivotant sont avantageusement fabriqués en une pièce, avec les parties respectives coopérant dans la liaison pivot.

Ce principe de liaison pivot peut être réalisé en pratique de diverses manières:
Selon une variante de conception, l'organe de fixation traverse le corps et comprend une portion de tige avec deux saillies radiales extérieures, définissant ainsi une gorge qui accueille une partie correspondante du corps pivotant, de sorte à permettre la rotation du corps pivotant autour de l'organe de fixation mais assurant son blocage axial. La partie du corps pivotant engagée dans la gorge peut être plus ou moins importante, par exemple toute l'épaisseur du corps ou bien simplement une languette radiale intérieure. Alternativement, l'organe de fixation comprend une portion de tige avec une saillie annulaire extérieure, qui vient se loger dans une gorge annulaire prévue dans un alésage traversant du corps.

Selon une autre variante de conception, l'organe de fixation ne traverse pas le corps et la liaison pivot est réalisée entre la tête de l'organe de fixation et le corps.

Les modes de réalisation décrits ci-dessus, ainsi que d'autres, sont repris dans les revendications dépendantes annexées.

### Description détaillée à l'aide des Figures d'au moins un mode de réalisation

D'autres particularités et caractéristiques de l'invention ressortiront de la description détaillée de quelques modes de réalisation avantageux présentés ci-dessous, à titre d'illustration, en se référant aux dessins annexés. Ceux-ci montrent :
Figures 1 à 6 et 8 : des vues schématiques en coupe de 7 variantes du présent point de levage;
Figure 7: une vue en perspective d'une autre variante du présent point de levage.

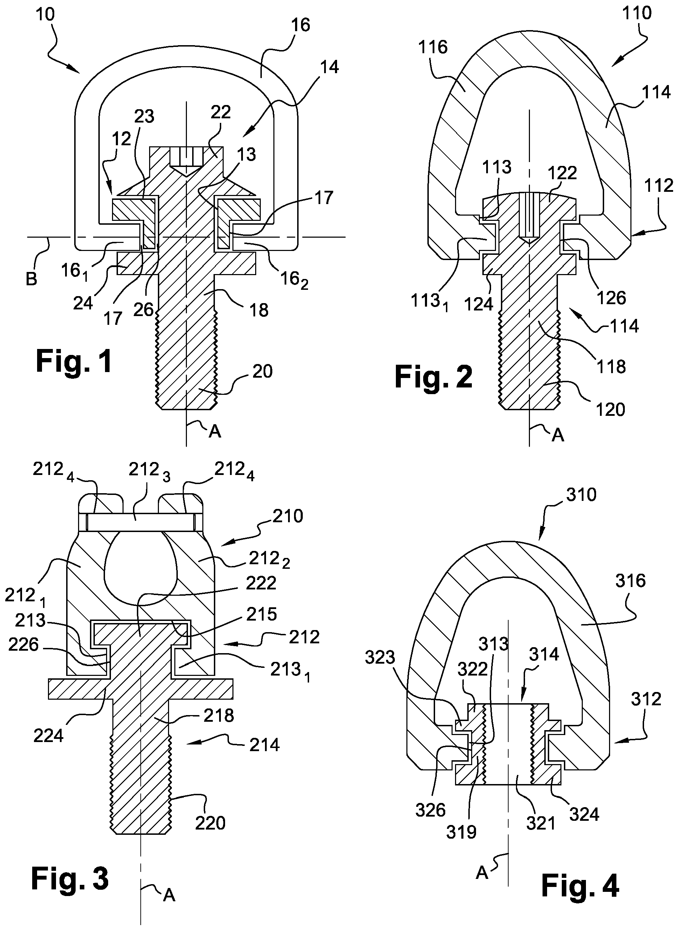

Une première variante de réalisation du point de levage 10 est illustrée à la figure 1. Il comprend un corps pivotant monobloc 12 et un organe de fixation 14 assemblés par une liaison pivot afin de permettre un pivotement relatif entre ces deux pièces. Le signe de référence 16 désigne un moyen d'attache associé au corps pivotant 12, lequel est apte à coopérer avec un accessoire de levage (non montré). Le moyen d'attache 16 prend ici la forme d'un étrier arrondi monté articulé sur le corps pivotant 12, constituant la boucle d'accrochage du point de levage 10.

L'organe de fixation 14 permet la fixation du point de levage 10 à une charge à lever et autorise le pivotement du corps 12 autour de l'organe de fixation 14 selon un axe A.

Le point de levage 10 de la figure 1 constitue donc un anneau de levage à double articulation, le corps 12 pouvant pivoter selon l'axe A autour de l'organe de fixation et la boucle 16 pouvant pivotant sur le corps 12 selon un axe perpendiculaire B. En utilisation, la boucle d'accrochage 16 permet la fixation d'un accessoire de levage tel qu'un crochet, une corde, une chaine, une élingue, un maillon intermédiaire, etc.

On appréciera que le corps 12 et l'organe de fixation 14 sont assemblés de manière indémontable par la liaison pivot.

Le corps pivotant 12, qui peut avoir une forme générale de disque, de parallélépipède, ou autre, comprend un alésage 13 traversant (ou passage) qui est traversé par l'organe de fixation 14. Dans la variante, le corps 12 a une forme initiale de disque et, avec l'alésage 13, présente donc une forme de grosse bague ou de manchon.

L'organe de fixation 14 est du type à vis et comprend une tige 18 ayant une extrémité filetée 20 et portant à l'autre extrémité une tête de vis épaulée 22. La tige 18 comprend en outre sur sa face extérieure une nervure ou saillie radiale 24.

La tête de vis 22 avec sa partie épaulée 23 et la saillie 24 constituent ainsi deux butées radiales qui définissent une gorge 26, qui accueille le corps 12. Ainsi, l'organe de fixation 14 traverse l'alésage 13 dans le corps 12. Le corps 12 peut tourner librement autour de l'organe à vis 14 et est bloqué axialement (au jeu de fonctionnement près) par les butées formées par la tête 22 et languette 24.

On appréciera que l'organe de fixation 14 et le corps 12 sont réalisés chacun en une seule pièce, ce qui rend l'anneau indémontable. Pour ce faire, le corps et/ou l'organe de fixation sont réalisés par fabrication additive métallique.

Les techniques de fabrication additives métalliques sont aujourd'hui à un stade de développement permettant une production industrielle. Il est possible de fabriquer les anneaux représentés sur les figures dans des matériaux métalliques (par ex. acier) ayant une tenue mécanique appropriée aux anneaux de levage. La fabrication peut par exemple se faire sur une machine ARCAM EBM -Electron Beam Melting, commercialisée par la société ARCAM AB à Mölndal, Suède. Cette machine est citée à titre d'exemple uniquement. L'homme du métier pourra sélectionner toute machine appropriée.

Pour une mise en œuvre simplifiée, on fabriquera l'organe de fixation et le corps dans la même opération de fabrication 3D.

Alternativement, on peut envisager de fabriquer une des pièces de la liaison pivot par une méthode traditionnelle, par exemple forgeage (ou moulage) et usinage, puis de fabriquer l'autre pièce par impression 3D autour de, respectivement dans, la première. On pourrait par exemple placer un organe de fixation fabriqué par forgeage-usinage classique dans la machine de fabrication additive pour réaliser le corps (pièce extérieure), par impression 3D, autour de l'organe de fixation.

La boucle d'accrochage 16 quant à elle peut être fabriquée par toute méthode appropriée, et donc par impression 3D ou par les méthodes conventionnelles, en particulier par forgeage. Le choix entre 3D ou méthode classique dépend de la configuration. Dans la variante de la figure 1, la boucle d'accrochage 16 a une forme générale de U dont les extrémités des branches 16₁ se terminent par des tourillons coaxiaux 16₂ qui s'étendent l'un vers l'autre à partir des dites branches 16₁ et qui sont engagés dans des logements servant de paliers de pivotement pour la boucle 16. Cette boucle 16, qui est de forme simple, peut être réalisée par forgeage et introduite dans les logements après fabrication de l'ensemble corps 12 et vis 14.

Les logements sont réalisés par deux encoches 17 diamétralement opposées, prévues dans le corps 14 à l'extrémité de celui-ci jouxtant la saillie annulaire 24. Les encoches sont ouvertes vers la saillie annulaire 24. Les tourillons 16₁, 16₂ sont donc maintenus dans les encoches ouvertes par la saillie annulaire 24.

Mais l'encoche pourrait être réalisée comme un perçage borgne dans la région médiane du corps.

Bien entendu, le diamètre de l'alésage 13 du corps 14 et le diamètre de la tige 18 au niveau de la gorge 26, ainsi que la distance entre l'épaulement 23 et la saillie 24, sont telles qu'un jeu fonctionnel axial et radial existe, permettant au corps 14 de tourner librement sur la tige 18. Mais également l'étendue radiale des butées 23 et 24 est suffisamment supérieure aux jeux de fonctionnement pour éviter tout désassemblage en force de la liaison pivot. En pratique, l'épaulement 23 de la tête 22 et la saillie 24 peut s'étendre radialement environ jusqu'à la périphérie du corps 12.

On voit également ici que la saillie 24 sert aussi bien à former une butée de guidage, que de surface d'appui contre la charge, ceci sans affecter la rotation du corps 12 après serrage.

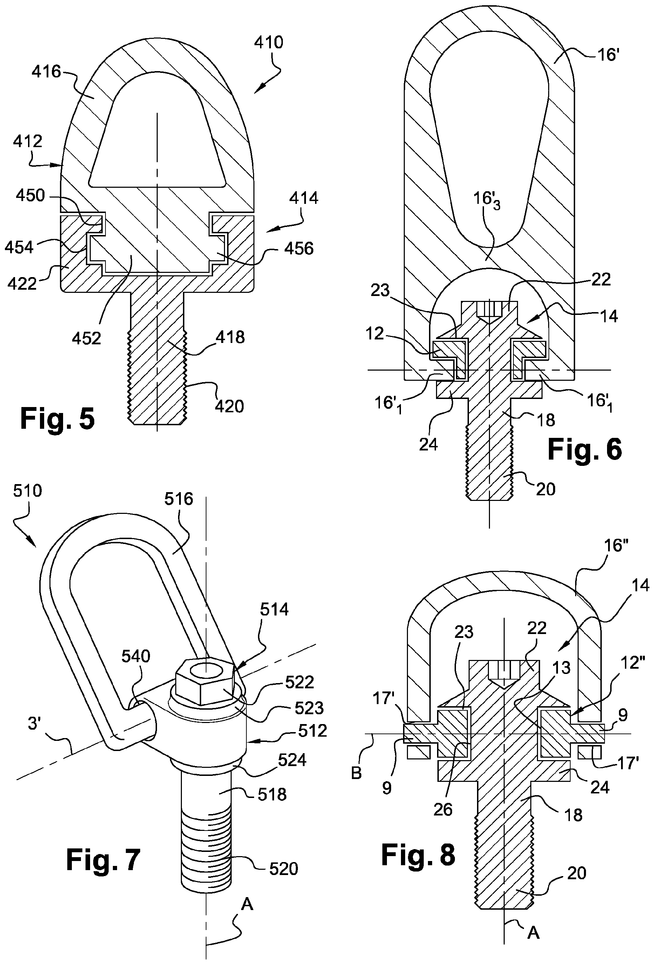

Il est clair pour l'homme du métier que d'autres configurations du corps et du montage articulé/pivotant de l'étrier/boucle sur celui-ci peuvent être envisagés. En particulier, tel qu'illustré dans la variante de la figure 8, le corps 12" pourrait avoir deux tourillons 9 diamétralement opposés, et l'étrier 16", en forme de U, aurait alors simplement à l'extrémité de ses branches des alésages 17' (oreilles) formant palier autour de ces tourillons 9.

La forme de la boucle peut aussi varier. Dans la figure 6 on a représenté une variante dans laquelle l'ensemble corps 12 et vis 14 est identique à la figure 1, et se distingue par une boucle 16' comprenant une traverse 16'₃. Une telle forme de boucle ne peut pas être montée après fabrication de l'ensemble corps 12 et vis 14, et sera donc fabriquée en 3D avec ceux-ci, ou préfabriquée et placée dans la machine 3D.

Une autre variante de réalisation est montrée à la figure 2. Le point de levage 110 a un corps monobloc 112, qui comporte une boucle d'accrochage 114 (de forme générale annulaire) rigidement solidaire du corps 112, de préférence formée d'une seule pièce avec le corps 112.

La liaison pivot implique un passage central 113, qui est traversé par l'organe de fixation à vis 114. L'organe de fixation 114 comprend une tige 118 avec une gorge annulaire 126 définie par deux ailes radiales. La première aile est formée par la tête de vis épaulée 122 et la deuxième par une saillie annulaire124. Pour son vissage, la tête de vis 122 comprend ici un trou borgne hexagonal, mais on pourrait bien entendu avoir une forme hexagonale en relief, ou toute autre forme adaptée pour le vissage.

Le passage 113 a un profil étagé: il comprend une nervure annulaire 113₁ (ou languette) qui vient s'engager dans la gorge 126 de la tige 118.

Le corps 112 avec boucle 116 et l'organe de fixation 114 sont des pièces intégrales, qui sont fabriqués par fabrication additive métallique.

La liaison pivot, qui permet un pivotement du corps autour de l'axe A, est donc indémontable.

La figure 3 propose une variante de point de levage 210, dans lequel la forme du moyen d'attache n'a pas une forme classique de boucle. Le corps 212 monobloc comprend deux bras latéraux 212₁ et 212₂ s'étendant sensiblement dans la direction de l'axe A. Les extrémités des bras sont percées. Une tige transversale 212₃ est passée à travers les orifices d'extrémité 212₄ des bras, et y est fixée, de sorte à fermer le passage entre les bras.

Pour la liaison pivot, l'organe de fixation 214 comprend une tige 218 avec une tête 222 de type champignon logée dans le corps 212 et une extrémité filetée 220. La tige 218 traverse un passage 213 ménage dans la face inférieure du corps 212, qui mène à une chambre borgne intérieure 215, dans laquelle se trouve la tête 222 de l'organe de fixation 14. Le diamètre de la tête 222 étant supérieur au diamètre du passage 213, la tête de vis est bloquée dans la chambre par conjugaison de formes. Toutefois, les entre les pièces 212 et 214 sont tels que le corps 212 peut pivoter autour de l'organe de fixation 214 selon l'axe A.

La tige 218 porte une saillie radiale 224 qui forme une butée radiale définissant une gorge 226 de pivotement avec l'épaulement de tête 222. La saillie radiale 226 permet de définir une butée axiale qui permet de ménager un jeu de fonctionnement au corps 212 lorsqu'il est vissé sur la charge à lever. Pour permettre de visser le point de levage 210, la saillie 224 s'étend radialement au-delà du corps 212 et a une forme périphérique hexagonale, ou autre forme appropriée, permettant son engagement par un outil de vissage/serrage.

Dans la variante de la figure 4, le point de levage 310 comprend à nouveau un corps 312 comportant une boucle d'accrochage 314 (de forme générale annulaire) rigidement solidaire du corps 312, formée d'une seule pièce avec celui-ci. Le corps comprend un alésage 313 définissant un passage pour un organe de fixation 314, assemblé par une liaison pivot, dans une réalisation similaire à la figure 2.

L'organe de fixation 314 est ici également du type à vis, mais femelle. Il s'agit un segment tubulaire 319 portant deux ailes définissant une gorge radiale 326. La tête de vis 322 définit une première aile 323. La deuxième aile 324 est une saillie radiale. Le corps 312 est donc engagé, au niveau du passage 313, dans la gorge 326.

Le diamètre extérieur du tube 319, le diamètre intérieur du passage 313, ainsi que la distance entre les deux ailes 322 et 324, sont tels qu'un jeu fonctionnel axial et radial existe, permettant au corps 312 de tourner librement sur le segment tubulaire 319.

Le passage interne 321 du segment tubulaire 319 est au moins partiellement taraudé, pour permettre la fixation de l'anneau par vissage sur une tige filetée solidaire de la charge à lever. La tête 322 a une forme périphérique hexagonale, ou autre forme appropriée, permettant son engagement par un outil de vissage/serrage.

Une autre variante est encore présentée en figure 5. L'anneau 410 comprend un corps 412 monobloc avec une boucle d'accrochage 416 rigidement solidaire du corps 412. Le corps 412 est assemblé par une liaison pivot à un organe de fixation à vis 414.

L'organe de fixation 414 monobloc comprend une tige filetée 418 avec une tête 422 dimensionnée pour accueillir, dans un trou borgne 450, une partie cylindrique 452 du corps 412. En particulier, le trou borgne 450 réalisé dans la tête 422, du côté opposé à la partie filetée 420 de tige, comprend une gorge annulaire 454. La partie cylindrique 452, engagée dans le trou 450, porte une languette annulaire 456 s'étendant radialement dans la gorge 454.

L'organe de fixation 414 et le corps 412 sont réalisés par fabrication additive métallique, si bien que la liaison pivot est indémontable.

La tête 422 a une forme périphérique hexagonale, ou autre forme appropriée, permettant son engagement par un outil de vissage/serrage.

Une dernière variante est montrée en figure 7. L'anneau de levage 510 comprend un corps 512 et un organe de fixation 514 à vis. Une liaison pivot indémontable permet une rotation relative d'axe A du corps 512 par rapport à l'organe de fixation 514. Une boucle de levage 516 est montée articulée sur le corps 512 et peut pivoter selon un axe B' perpendiculaire à l'axe A, mais décalé latéralement par rapport à celui-ci (comparé à la variante de la Fig.6 où l'axe B croise l'axe A).

Le corps 512 est une pièce monobloc comprenant un alésage traversant pour l'organe de fixation à vis 514. L'organe de fixation 514 comporte une tige 518 avec une tête 522 dont la partie inférieure forme une collerette 523, et une saillie radiale 524. La collerette 523 et la butée 524 forment deux butées radiales axialement espacées, définissant une gorge annulaire dans laquelle est engagée le corps 512 pour sa rotations d'axe A. La liaison pivot est donc réalisée de la même manière qu'à la figure 2.

La boucle 516 est un corps annulaire dont une partie s'engage dans un alésage traversant 540 du corps 512, s'étendant transversalement à l'axe A, et décalé par rapport à celui-ci, pour permettre le pivotement de la boucle selon B'. La boucle 516 peut être partiellement ouverte (similaire à la boucle 16 de la fig.1) ou complètement fermée, ce qui ne pose pas de problème dans le cadre de la fabrication 3D.

Comme on l'aura compris à la lumière des variantes ci-dessus, l'invention présente un point de levage indémontable, en ce que les parties de l'organe de fixation et du corps coopérant dans la liaison pivot sont réalisées en une seule pièce. En particulier, l'organe de fixation et le corps sont fabriqués chacun en une pièce, ce qui est possible par l'utilisation de la fabrication métallique additive.

Selon la technologie de fabrication additive employée, l'ordre de fabrication peut être modifié. On peut par exemple envisager:
- la fabrication de l'ensemble de l'anneau en impression 3D métallique, c'est-à-dire corps, organe de fixation et boucle d'accrochage.
- la fabrication de l'ensemble corps-organe de fixation par impression 3D métallique, et l'ajout ultérieure de la boucle forgée, si la forme de boucle le permet.
- la préfabrication du corps ou de l'organe de fixation par des méthodes conventionnelles, et la fabrication additive de l'autre pièce autour de la pièce préfabriquée.

## Revendications

1. Point de levage pour le levage de charges comprenant :
un corps (12 ; 112 ; 212 ; 312 ; 412 ; 512) pivotant auquel est associé un moyen d'attache (16 ; 16' ; 116 ; 316 ; 416 ; 516) apte à coopérer avec un accessoire de levage ;
un organe de fixation (14 ; 114 ; 214 ; 314 ; 414 ; 514) pour fixer le point de levage à la charge, l'organe de fixation et le corps pivotant étant assemblés par une liaison pivot permettant un pivotement relatif du corps par rapport à l'organe de fixation selon un axe A ;
**caractérisé en ce que** les parties de l'organe de fixation et du corps pivotant coopérant dans la liaison pivot sont chacune réalisées d'une seule pièce, et **en ce que** l'une et/ou l'autre de ces parties sont fabriquées par fabrication additive métallique.

2. Point de levage selon la revendication 1, dans lequel les parties coopérantes de l'organe de fixation et du corps pivotant forment au moins un ensemble gorge (126) et languette (113₁) annulaire.

3. Point de levage selon la revendication 2, dans lequel le corps et l'organe de fixation, avec l'ensemble gorge et languette annulaire, sont réalisés en une pièce, respectivement.

4. Point de levage selon la revendication 1, 2 ou 3, dans lequel l'une des parties coopérantes dans la liaison pivot forme une gorge annulaire (26), et l'autre partie est reçue dans la gorge.

5. Point de levage selon l'une quelconque des revendications précédentes, dans lequel l'organe de fixation (14 ; 114 ; 314 ; 514) est du type à vis et passe dans un alésage (13 ; 113 ; 313) du corps, définissant ainsi l'axe de pivotement relatif (A).

6. Point de levage selon la revendication 5, dans lequel
l'organe de fixation (14 ; 114 ; 514) comprend une tige (18 ; 118 ; 518) ayant une tête épaulée (22 ; 122 ; 522) et une extrémité filetée (20 ; 120 ; 520), ainsi qu'une saillie annulaire (24; 124; 524) définissant, avec la tête épaulée, une gorge annulaire (26 ; 126), la tête épaulée et la saillie annulaire étant réalisées d'une pièce avec la tige ; et
le corps est engagé dans cette gorge annulaire de sorte à pivoter autour de l'organe de fixation, en étant limité axialement par la tête et la saillie annulaire.

7. Point de levage selon la revendication 5, dans lequel
l'organe de fixation (314) comprend un corps cylindrique creux (319) traversant l'alésage (313) du corps pivotant et portant deux saillies radiales (322; 324) extérieures formant une gorge (326) dans laquelle est engagée le corps de sorte à pivoter autour du corps cylindrique creux ; et
le passage intérieur (321) du corps cylindrique est au moins partiellement taraudé pour sa fixation sur une tige filetée solidaire de la charge.

8. Point de levage selon l'une quelconque des revendications 1 à 3, dans lequel l'organe de fixation (414) comprend une tête (422) dimensionnée pour accueillir, dans un trou borgne (450), une partie cylindrique (452) du corps (412), le trou borgne ou la partie cylindrique portant un gorge annulaire (454) et l'autre une languette annulaire (456) engagée dans la gorge annulaire.

9. Point de levage selon l'une quelconque des revendications 1 à 3, dans lequel l'organe de fixation (214) comprend une tête élargie (222) logée dans un trou borgne (215) du corps, le trou borgne comprenant un passage d'entrée (213) resserré s'engageant dans une gorge (226) formée entre la tête et une saillie radiale (224) située sur l'organe de fixation, à l'extérieur du corps;
la saillie radiale (224) a une forme périphérique permettant son engagement par un outil de vissage/serrage.

10. Point de levage selon l'une quelconque des revendications précédentes, dans lequel le moyen d'attache est une boucle articulée ((16 ; 16' ; 516) sur le corps pivotant ou une boucle (116 ; 316; 416) en une pièce avec le corps pivotant.

11. Point de levage selon la revendication 10, dans lequel la boucle (16) est articulée sur le corps (12) de sorte à pivoter selon un axe (B) sensiblement perpendiculaire à l'axe (A) et traversant l'organe de fixation.

12. Point de levage selon la revendication 10, dans lequel la boucle (516) est engagée dans un alésage traversant (540) du corps (512), s'étendant selon un axe (B) transversal à l'axe de rotation du corps (A) et décalé latéralement par rapport à celui-ci.

## Patentansprüche

1. Hebepunkt zum Heben von Lasten, umfassend:
einen schwenkbaren Körper (12; 112; 212; 312; 412; 512), dem ein Verbindungsmittel (16; 16'; 116; 316; 416; 516) zugeordnet ist, das imstande ist, mit einem Hebezeug zusammenzuwirken;
ein Befestigungsorgan (14; 114; 214; 314; 414; 514), um den Hebepunkt an der Last zu befestigen, wobei das Befestigungsorgan und der schwenkbare Körper durch eine Drehzapfenverbindung verbunden sind, die eine relative Schwenkung des Körpers gegenüber dem Befestigungsorgan gemäß einer Achse A gestattet;
**dadurch gekennzeichnet, dass** die Teile des Befestigungsorgans und des schwenkbaren Körpers, die in der Drehzapfenverbindung zusammenwirken, jedes aus einem Stück ausgebildet sind und dadurch dass das eine und/oder das andere dieser Teile durch metallische additive Fertigung gefertigt sind.

2. Hebepunkt nach Anspruch 1, wobei die zusammenwirkenden Teile des Befestigungsorgans und des schwenkbaren Körpers mindestens eine ringförmige Einheit aus Nut (126) und Feder (113₁) bilden.

3. Hebepunkt nach Anspruch 2, wobei der Körper und das Befestigungsorgan, mit der ringförmigen Einheit aus Nut und Feder, jeweils aus einem Stück ausgebildet sind.

4. Hebepunkt nach Anspruch 1, 2 oder 3, wobei eines der in der Drehzapfenverbindung zusammenwirkenden Teile eine ringförmige Nut (26) bildet und das andere Teil in der Nut aufgenommen ist.

5. Hebepunkt nach einem der vorhergehenden Ansprüche, wobei das Befestigungsorgan (14; 114; 314; 514) des Schraubentyps ist und in eine Bohrung (13; 113; 313) des Körpers eintritt, wodurch es die relative Schwenkachse (A) bildet.

6. Hebepunkt nach Anspruch 5, wobei
das Befestigungsorgan (14; 114; 514) einen Schaft (18; 118; 518) umfasst, der einen abgesetzten Kopf (22; 122; 522) und ein mit Außengewinde versehenes Ende (20; 120; 520) aufweist,
sowie einen ringförmigen Vorsprung (24; 124; 524) umfasst, der, mit dem abgesetzten Kopf, eine ringförmige Nut (26; 126) definiert, wobei der abgesetzte Kopf und der ringförmige Vorsprung aus einem Stück mit dem Schaft ausgebildet sind; und
der Körper in dieser ringförmigen Nut so im Eingriff ist, dass er sich um das Befestigungsorgan dreht, wobei er axial durch den Kopf und den ringförmigen Vorsprung begrenzt wird.

7. Hebepunkt nach Anspruch 5, wobei
das Befestigungsorgan (314) einen zylindrischen Hohlkörper (319) umfasst, der die Bohrung (313) des schwenkbaren Körpers durchsetzt und zwei äußere radiale Vorsprünge (322; 324) trägt, die eine Nut (326) bilden, in welcher der Körper so im Eingriff ist, dass er sich um den zylindrischen Hohlkörper dreht; und
der innere Kanal (321) des zylindrischen Körpers mindestens teilweise mit Innengewinde versehen ist für seine Befestigung an einer Gewindestange, die mit der Last verbunden ist.

8. Hebepunkt nach einem der Ansprüche 1 bis 3, wobei das Befestigungsorgan (414) einen Kopf (422) umfasst, der dimensioniert ist, um, in einem Blindloch (450), einen zylindrischen Teil (452) des Körpers (412) aufzunehmen, wobei das Blindloch oder der zylindrische Teil eine ringförmige Nut (454) trägt und das/der andere eine ringförmige Feder (456) trägt, die in der ringförmigen Nut im Eingriff ist.

9. Hebepunkt nach einem der Ansprüche 1 bis 3, wobei das Befestigungsorgan (214) einen aufgeweiteten Kopf (222) umfasst, der in einem Blindloch (215) des Körpers aufgenommen ist, wobei das Blindloch einen verengten Eingangskanal (213) umfasst, der in einer Nut (226) in Eingriff kommt, die gebildet ist zwischen dem Kopf und einem radialen Vorsprung (224), der sich an dem Befestigungsorgan befindet, außerhalb des Körpers;
der radiale Vorsprung (224) eine Umfangsform aufweist, die dessen Ineingriffnahme durch ein Werkzeug zum Verschrauben/Festziehen gestattet.

10. Hebepunkt nach einem der vorhergehenden Ansprüche, wobei das Verbindungsmittel ein Bügel (16; 16'; 516) ist, der an dem schwenkbaren Körper angelenkt ist, oder ein Bügel (116; 316; 416) ist, der aus einem Stück mit dem schwenkbaren Körper ausgebildet ist.

11. Hebepunkt nach Anspruch 10, wobei der Bügel (16) an dem Körper (12) so angelenkt ist, dass er sich gemäß einer Achse (B) dreht, die zu der Achse (A) im Wesentlichen senkrecht ist und die das Befestigungsorgan durchquert.

12. Hebepunkt nach Anspruch 10, wobei der Bügel (516) in einer Durchgangsbohrung (540) des Körpers (512) im Eingriff ist, die sich gemäß einer Achse (B) erstreckt, die zu der Schwenkachse des Körpers (A) quergerichtet ist und gegenüber dieser seitlich versetzt ist.

## Claims

1. A lifting point for lifting loads, comprising:
a swivel body (12; 112; 212; 312; 412; 512) with which is associated a coupling means (16; 16'; 116; 316; 416; 516) capable of cooperating with a lifting accessory;
a fixing member (14; 114; 214; 314; 414; 514) for fixing the lifting point to the load, the fixing member and the swivel body being joined together by a swivel linkage allowing the body to swivel relative to the fixing member around an axis A;
**characterised in that** the parts of the fixing member and of the swivel body cooperating in the swivel linkage are each made in one piece, and **in that** one and/or the other of these parts is/are manufactured by metallic additive manufacturing.

2. A lifting point according to claim 1, in which the cooperating parts of the fixing member and of the swivel body form at least one annular tongue (113₁) and groove (126) assembly.

3. A lifting point according to claim 2, in which the body and the fixing member, with the annular tongue and groove assembly, are respectively made in one piece.

4. A lifting point according to claim 1, 2 or 3, in which one of the parts cooperating in the swivel linkage forms an annular groove (26), and the other part is received in the groove.

5. A lifting point according to any one of the preceding claims, in which the fixing member (14; 114; 314; 514) is of the screw type and extends into a bore (13; 113; 313) in the body, thereby defining the relative swivel axis (A).

6. A lifting point according to claim 5, in which
the fixing member (14; 114; 514) comprises a shank (18; 118; 518) having a head (22; 122; 522) with shoulders and a threaded end (20; 120; 520), as well as an annular protrusion (24; 124; 524) defining, with the head with shoulders, an annular groove (26; 126), the head with shoulders and the annular protrusion being made in one piece with the shank; and
the body is engaged in this annular groove so as to swivel around the fixing member, while being limited axially by the head and the annular protrusion.

7. A lifting point according to claim 5, in which
the fixing member (314) comprises a hollow cylindrical body (319) passing through the bore (313) in the swivel body and bearing two external radial protrusions (322; 324) forming a groove (326) in which the body is engaged so as to swivel about the hollow cylindrical body; and
the internal passage (321) of the cylindrical body is at least partly threaded for fixing thereof on a threaded shank integral with the load.

8. A lifting point according to any one of claims 1 to 3, in which the fixing member (414) comprises a head (422) dimensioned so as to accommodate, in a blind hole (450), a cylindrical part (452) of the body (412), the blind hole or the cylindrical part bearing an annular groove (454) and the other bearing an annular tongue (456) engaged in the annular groove.

9. A lifting point according to any one of claims 1 to 3, in which the fixing member (214) comprises a widened head (222) accommodated in a blind hole (215) in the body, the blind hole comprising a narrow entry passage (213) engaging in a groove (226) formed between the head and a radial protrusion (224) located on the fixing member, outside the body;
the radial protrusion (224) has a peripheral shape which allows engagement thereof by a screwing/tightening tool.

10. A lifting point according to any one of the preceding claims, in which the coupling means is a loop (16; 16'; 516) hinged on the swivel body or a loop (116; 316; 416) in one piece with the swivel body.

11. A lifting point according to claim 10, in which the loop (16) is hinged to the body (12) so as to swivel about an axis (B) substantially perpendicular to the axis (A) and passing through the fixing member.

12. A lifting point according to claim 10, in which the loop (516) is engaged in a through-bore (540) in the body (512), extending along an axis (B) transverse to the axis of rotation of the body (A) and offset laterally relative thereto.
